# FASCICULE DE BREVET EUROPEEN

(11) **EP 0 743 163 B1**
(45) Date de publication et mention de la délivrance du brevet: **15.01.2003**
(21) Numéro de dépôt: 96201237.3
(22) Date de dépôt: 04.05.1996
(51) Int. Cl.: B29C 59/04

(54) **Film thermoplastique grainé et procédé pour sa fabrication**
Genarbte, thermoplastische Folie und Verfahren zu ihrer Herstellung
Grained thermoplastic film and process for the fabrication

(30) Priorité: 15.05.1995 BE 9500436
(43) Date de publication de la demande: 20.11.1996
(73) Titulaire: SOLVAY (Société Anonyme), 1050 Bruxelles (BE)
(72) Inventeur: Karsten, Petrus J. A., 1602 NV Enkhuizen (NL); Branchadell, José, B-3080 Tervuren (BE); Van Zanten, Simon, 1601 LV Enkhuizen (NL)
(74) Mandataire: Dufrasne, Eugène

(56) Documents cités:
- EP-A- 0 008 382
- EP-A- 0 253 260
- CH-A- 517 577
- DE-B- 1 207 610
- DE-B- 1 629 352
- DE-C- 4 220 839
- FR-A- 1 466 513
- US-A- 4 021 179
- PATENT ABSTRACTS OF JAPAN vol. 012, no. 485 (M-777), 19 Décembre 1988 & JP-A-63 205214 (HAYASHI TERENPU KK), 24 Août 1988,
- DATABASE WPI Section Ch, Week 9040 Derwent Publications Ltd., London, GB; Class A96, AN 90-300689 XP002011220 & JP-A-02 211 160 ( SEKISUI CHEM IND KK) , 22 Août 1990

## Description

La présente invention concerne un procédé de fabrication d'un film thermoplastique grainé sur ses deux faces, un film thermoplastique selon ce procédé, une utilisation d'un tel film pour la fabrication d'un article et un article ainsi réalisé.

Depuis longtemps, les articles en matière thermoplastique sont utilisés dans de très nombreuses et diverses applications. En général, pour chacune de ces applications il est souhaitable que la matière thermoplastique utilisée présente un état de surface déterminé qui la rende particulièrement apte à l'utilisation envisagée. Par exemple, dans le domaine des accessoires médicaux, et plus particulièrement des poches à sang ou à soluté qui nécessitent une stérilisation, il est bien connu que des surfaces de paroi lisses provoquent, lors de la stérilisation (plusieurs minutes à 121 °C), à la fois un collage interne de la poche sur elle-même et un collage entre poches voisines, ce qui est tout à fait indésirable.

Parmi les solutions proposées pour remédier notamment à ce problème, figure le grainage des feuilles constitutives de la poche.

Le grainage en continu d'une feuille ou d'un film thermoplastique est une technique bien connue qui consiste à faire passer la feuille ou le film thermoplastique chaud entre un cylindre dit cylindre de grainage et un contre-cylindre ou cylindre presseur. Le cylindre de grainage est le plus souvent métallique et présente une surface dont le relief, ou grain, est le négatif du relief souhaité pour la feuille ou le film. Le cylindre presseur est lui constitué d'une matière élastique, habituellement du caoutchouc, et doit le plus souvent être refroidi. Le cylindre presseur exerce habituellement sur le cylindre de grainage une pression linéaire inférieure à 100 kN/m, plus couramment de l'ordre de 5 à 50 kN/m.

Le grainage des deux faces du film thermoplastique ne peut être réalisé de manière satisfaisante selon cette technique, car une éventuelle étape de grainage supplémentaire, avec un cylindre de grainage en contact avec la seconde face, aurait pour conséquence une détérioration, voire un effacement total, du grainage de la première face.

Une ébauche de solution à ce problème a été proposée dans le brevet FR 2 358 255 B1 déposé au nom de SOLVAY & Cie. Le grainage est effectué sur les deux faces d'un produit plat grâce à un dispositif à trois cylindres: un premier cylindre de grainage, un cylindre presseur en caoutchouc et un second cylindre de grainage, métallique, appliqué sur le premier cylindre de grainage avec une pression linéaire du même ordre de grandeur que celle du cylindre presseur.

Une autre solution consiste à utiliser un cylindre presseur en matière élastomérique et grainé. Ce procédé ne permet néanmoins pas un grainage très uniforme des deux faces du produit.

D'autre part, ces essais de solution prônent toujours l'utilisation d'un cylindre presseur en matériau élastique, ce qui présente d'autres désavantages.

Un premier désavantage est représenté par le risque de pollution du produit par des particules de ce matériau élastique, ce qui est hautement indésirable, particulièrement pour des applications médicales où toute contamination est à proscrire.

Un deuxième désavantage est constitué par le fait qu'il est impossible de travailler avec un cylindre presseur en caoutchouc possédant une température suffisante pour procurer un grain stable dans le temps, surtout à la température de stérilisation (121°C).

Un troisième désavantage réside dans le fait qu'un cylindre en matière élastomérique ne permet aucun grainage de certaines matières thermoplastiques, telles les polyoléfines, pour lesquelles il y a des problèmes de collage sur le cylindre, et les matières thermoplastiques de masse moléculaire moyenne élevée, c'est-à-dire aussi celles possédant une élasticité significative, pour lesquelles il y a des problèmes d'uniformité d'épaisseur et d'uniformité du grain.

Un quatrième désavantage est qu'un tel cylindre presseur, de par son élasticité, ne permet pas de faire varier dans une large mesure l'épaisseur finale du produit plat, en réglant son écartement avec le cylindre de grainage.

Un cinquième désavantage est le manque de régularité et de stabilité en fonction du temps du grainage réalisé avec un tel cylindre.

Enfin, un désavantage supplémentaire d'un cylindre presseur constitué de matière élastomérique est que cette matière possède une faible conductibilité thermique, ce qui empêche une thermostatisation efficace et uniforme du cylindre, élément nécessaire à l'obtention d'un produit de qualité constante.

Une troisième ébauche de solution est présentée dans la demande de brevet EP 0 253 260 A1 dans laquelle une feuille de polyuréthanne est grainée sur ses deux faces par un procédé faisant intervenir deux paires de cylindres métalliques. Une première face de la feuille est grainée par passage entre un premier cylindre de grainage et un premier cylindre presseur en acier. La face non grainée de la feuille est ensuite grainée, lors d'une seconde étape, par passage de la feuille entre un second cylindre de grainage et un second cylindre presseur en acier.

Ce procédé fait donc appel au total à quatre cylindres métalliques et présente le désavantage supplémentaire que le grainage de la première face est forcément altéré lors du grainage de la seconde face, d'autant plus que ce second grainage est réalisé à plus haute température que le premier.

La présente invention a donc pour objet un procédé de fabrication d'un film thermoplastique grainé sur ses deux faces qui ne présente pas les multiples inconvénients dus à l'emploi d'un cylindre en matière élastomérique, qui utilise une paire de cylindres métalliques et qui réalise simultanément le grainage des deux faces du film ou de la feuille, grainage résistant à la stérilisation.

Dès lors, l'invention concerne un procédé de fabrication d'un film thermoplastique grainé sur ses deux faces, par passage de matière thermoplastique entre deux cylindres de grainage, les deux cylindres de grainage étant essentiellement constitués de métal de haute dureté et le procédé réalisant le grainage simultané des deux faces du film.

Par film thermoplastique, on entend désigner tout produit plat, y compris, par exemple, une feuille ou un ruban, qui comprenne au moins une matière thermoplastique. De préférence, le film thermoplastique est essentiellement constitué d'au moins une matière thermoplastique. Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment), par exemple les copolymères à distribution aléatoire, les copolymères séquences, les copolymères à bloc, les copolymères greffés, etc.

En particulier, le film thermoplastique comprend une polyoléfine.

Par "polyoléfine", on désigne tout homopolymère d'oléfine, tout polymère contenant au moins deux oléfines différentes et tout polymère comprenant au moins 50 % en poids d'unités dérivées d'oléfines, ainsi que les mélanges de ces homo- et/ou copolymères entre eux ou avec moins de 50 % en poids de polymères non oléfiniques.

A la ou aux matières thermoplastiques peuvent être ajoutés un ou plusieurs additifs classiques, polymériques ou non, tels des charges minérales ou organiques, des matières de renforcement (fibres par exemple), des stabilisants, lubrifiants, etc.

Un film grainé est un film dont au moins une des deux faces, chaude au départ, a subi une modification de son relief par moulage sur une surface de relief complémentaire. Dans le cas d'un procédé continu, la surface de relief complémentaire est en général constituée par la surface gravée ou sablée d'un rouleau ou cylindre. En particulier, un film grainé possède une rugosité telle que Ra soit au moins égal à 0,1 µm (selon la norme DIN 4768 - mai 1990). De préférence Ra est au moins égal à 0,5 µm.

Le grain du film peut être de structure régulière ou irrégulière. Un grain de structure régulière est un grain conduisant à un profil de surface périodique (pour définition de ces termes, voir la norme ISO 4287/1 - 15 déc. 1984). Un grain de structure irrégulière conduit à un profil de surface aléatoire.

Nous entendons par "métal" un métal proprement dit ou un alliage métallique avec leurs additifs usuels.

Un métal de haute dureté est un métal hautement résistant à la déformation superficielle. En particulier, sa dureté selon le test de Vickers (nonne ASTM E 92 - 82 (reapproved 1987)) n'est pas inférieure à 150 HV. De préférence la dureté du métal n'est pas inférieure à 200 HV. De manière encore préférée, elle n'est pas inférieure à 350HV.

Notons que les cylindres peuvent comporter divers accessoires d'autre nature comme des raccords ou des canalisations internes, ou avoir subi un traitement de surface améliorant encore leurs propriétés, comme, par exemple, un chromage ou une nitruration.

Divers métaux de haute dureté peuvent être retenus. De très bons résultats ont été obtenus avec des cylindres essentiellement constitués d'acier ou de fonte.

Les deux cylindres peuvent être entraînés en rotation par des mécanismes communs ou indépendants. De façon avantageuse, chacun des cylindres est entraîné en rotation par un mécanisme indépendant. Ceci signifie que la vitesse de rotation de l'un des cylindres peut être réglée sans affecter la vitesse de rotation de l'autre cylindre. Toute méthode d'entraînement peut convenir. Par exemple, chaque cylindre peut être mû au moyen d'un moteur-variateur.

La demanderesse a également constaté qu'il était avantageux que l'un au moins des cylindres soit maintenu à température désirée par circulation interne d'un fluide caloporteur.

La circulation interne du fluide caloporteur peut s'effectuer suivant toute méthode connue. Des résultats très satisfaisants ont été obtenus avec un cylindre muni de canaux périphériques dans lesquels circule de l'eau à la température souhaitée.

De manière préférée, les deux cylindres sont conditionnés en température, avec des températures de conditionnement éventuellement différentes pour chaque cylindre. De manière encore plus préférée, les deux cylindres sont conditionnés à une température au moins égale à 121°C.

Dans un mode d'exécution possible du procédé selon l'invention, le passage de la matière thermoplastique entre les cylindres s'accompagne de la formation d'un bourrelet, c'est-à-dire d'une surépaisseur de la matière thermoplastique accumulée dans la partie amont de l'entrefer des deux cylindres. Ce bourrelet, classique en calandrage, apparaît dans certaines conditions de fonctionnement. Il résulte d'une recirculation de la matière thermoplastique dans l'entrefer et son amplitude dépend, notamment, du débit, des vitesses relatives et de l'écartement relatif des deux cylindres, ainsi que des paramètres rhéologiques de la matière thermoplastique.

Les cylindres sont conçus de telle façon que leur écartement mutuel soit adaptable à l'épaisseur voulue pour le film thermoplastique.

La formation d'un bourrelet s'accompagne d'une pression élevée exercée entre les deux cylindres. Typiquement, les cylindres doivent supporter des pressions linéaires de l'ordre de plusieurs centaines de kN/m, entre 400 et 1000 kN/m plus particulièrement.

Le dispositif d'alimentation de la matière thermoplastique dans l'entrefer des cylindres peut être quelconque. Selon une méthode préférée, la matière provient directement d'une extrudeuse ou d'une gélifieuse. Cette matière peut aussi bien être introduite sous forme d'un produit plat que sous forme d'un jonc. Dans ce dernier cas, le film thermoplastique est formé "in situ" entre les cylindres de grainage. Dans le cas où la matière thermoplastique est introduite dans l'entrefer déjà sous forme de produit plat, ce dernier peut posséder une largeur tant inférieure que supérieure à la largeur désirée pour le produit final.

La largeur finale désirée pour le film est atteinte en adaptant certains paramètres du procédé comme, par exemple, les vitesses des cylindres par rapport à la vitesse de la matière thermoplastique à la sortie du dispositif d'alimentation ou la distance entre ce dernier et les cylindres. L'épaisseur finale du film thermoplastique est, quant à elle, déterminée par l'écartement entre les deux cylindres de grainage.

La demanderesse a constaté que le procédé selon l'invention, non seulement permettait d'obtenir en une seule opération un film thermoplastique grainé sur ses deux faces, mais de plus permettait d'obtenir des films thermoplastiques de nature nouvelle.

Dès lors, l'invention concerne également un film thermoplastique, grainé sur ses deux faces, obtenable par le procédé décrit ci-dessus et qui comprend une polyoléfine de haute masse moléculaire moyenne ayant un MFI qui m'est pas supérieur à 3,0.

Une polyoléfine de haute masse moléculaire moyenne est une polyoléfine dont le "melt flow index", ou MFI, n'est pas supérieur à 3,0 En particulier, le MFI est mesuré selon la norme ASTM D 1238-90b, sous une charge de 2,16 kg et est exprimé en g/10 min. La température de mesure est de 190°C pour les polymères d'éthylène (ou polymères contenant au moins 50 % en poids d'éthylène) et de 230°C pour les polymères de propylène (ou polymères contenant au moins 50 % en poids de propylène).

Le MFI de la polyoléfine n'est pas supérieur à 3,0.

L'utilisation de résines de haute masse moléculaire moyenne, conduisant à des films non grainables suivant les procédés habituels, présente l'avantage que la résistance mécanique des films réalisés partir de ces résines est améliorée par rapport à ceux réalisés à partir de résines de masse moléculaire moyenne plus faible. Ainsi, pour obtenir un produit de même résistance mécanique, l'épaisseur du film thermoplastique peut être réduite. Une telle réduction d'épaisseur est particulièrement bienvenue lorsque ces films servent à la réalisation d'articles pour lesquels une perméabilité aux gaz élevée est désirée, ce qui est souvent le cas des contenants pour fluides biologiques.

L'invention concerne de plus un film thermoplastique, grainé sur ses deux faces, obtenable par le procédé décrit ci-dessus et comprenant une polyoléfine, qui se caractérise en ce qu'il comporte, sur ses deux faces, un grain de structure régulière. Un tel grain est par exemple celui résultant, sur les cylindres, d'une opération de moletage ou de gravure chimique.

L'invention concerne encore un film thermoplastique, grainé sur ses deux faces, obtenable par le procédé décrit ci-dessus et qui se caractérise en ce qu'il comporte, sur ses deux faces, au moins une zone optiquement claire.

Par zone optiquement claire, on entend une portion de la surface, de forme quelconque, telle qu'un rayon lumineux traversant le film dans cette zone est transmis sans diffusion significative aux interfaces (au moins dans le domaine du rayonnement visible). Une zone optiquement claire peut cependant comprendre, par exemple, des nervures ou un relief tel que le collage durant la stérilisation soit évité.

La zone optiquement claire peut s'obtenir, par exemple, en utilisant des cylindres de grainage dont une portion correspondante de la surface possède un fini de type miroir en lieu et place de la structure de grain à imprimer.

L'invention concerne encore un film thermoplastique, grainé sur ses deux faces, obtenable par le procédé décrit ci-dessus et qui se caractérise en ce qu'il comporte, au moins sur une même face, un grain de structure régulière avec au moins une zone optiquement claire.

Les films thermoplastiques suivant l'invention ont des caractéristiques, notamment d'aspect de surface, qui les rendent intéressants pour de nombreuses applications, comme par exemple le domaine dit de la papeterie et petite maroquinerie. Cependant, vu en particulier leur aptitude à la stérilisation, c'est dans le domaine médical que les applications préférées seront réalisées.

Dès lors, l'invention a également pour objet une utilisation d'au moins un film thermoplastique décrit ci-dessus pour la fabrication d'un article à usage médical.

Par usage médical, on entend toutes les applications ayant un rapport avec l'art de conserver ou de rétablir la santé humaine ou animale. Ceci inclut notamment la chirurgie, la pharmacie ou la dentisterie.

Un dernier objet de l'invention est constitué par un article à usage médical comprenant au moins un film thermoplastique tel que décrit ci-dessus.

L'article concerné par la présente invention peut être de toute nature. Il peut s'agir, par exemple, d'une poche, d'un pansement, d'une alaise,...

Il s'agit de préférence d'une poche constituée essentiellement d'au moins un film thermoplastique tel que décrit ci-dessus. De très bons résultats ont été obtenus avec une poche constituée de deux films thermoplastiques suivant l'invention.

Ladite poche peut être destinée à contenir, entre autres, du sang, du sérum, un soluté, tissu ou fluide biologiques ou une solution nutritive.

Les exemples cités ci-dessous concernent des films polymères de chlorure de vinyle et ne font pas partie de l'invention bien qu'étant utiles à sa compréhension.

### Exemples

L'exemple 1, non conforme à l'invention, est donné à titre de comparaison. Les exemples 2 à 5 illustrent l'invention.

### Exemple 1 (de référence)

Un film de 350 µm d'épaisseur a été obtenu selon la technique habituelle de calandrage, à partir d'une composition comprenant (les parts sont données en poids):
. un polymère de chlorure de vinyle de nombre K= 71 (résine obtenue par procédé en suspension) 100 parts
. plastifiant (diéthylhexylphtalate principalement) 50 parts
. stabilisant thermique 2 parts

Ce film, à une température de 180°C a été grainé selon la technique conventionnelle, par passage entre un cylindre gravé en acier (face I, gravure de type 1A, irrégulière), chauffé par circulation interne d'eau à 50°C, et un cylindre en caoutchouc (face II), refroidi par circulation interne d'eau à 15°C. La température de surface de ce cylindre, après grainage a été mesurée à environ 90°C par une caméra à infrarouge.

La rugosité du film résultant a été mesurée sur ses deux faces au moyen d'un perthomètre PERTHERN® selon la norme DIN 4768 - mai 1990 , avant et après stérilisation à la vapeur d'eau dans un autoclave à 121°C pendant 30 minutes.

Douze points de mesure, répartis uniformément sur la surface d'une feuille issue du film ont été utilisés. La dimension de la feuille correspond à la surface développée des cylindres. Les valeurs de rugosité des cylindres ont aussi été déterminées. Chaque point a été mesuré 3 fois. Les valeurs moyennes des mesures sont données au tableau 1

**Tableau 1:**

| valeurs des rugosités mesurées pour l'exemple 1 | | | | | |
|---|---|---|---|---|---|
| Face | Cylindre (µm) | Film avant stérilisation (µm) | Film après stérilisation (µm) | Rendement du grainage (%) | Stabilité à la stérilisation (%) |
| I | | | | | |
| Ra | 8,4 | 5,1 | 3,9 | 61 | 77 |
| Rmax | - | 31,7 | 23,4 | - | 74 |
| Rz | 43,6 | 24,7 | 19,0 | 57 | 77 |

| II | | | | | |
|---|---|---|---|---|---|
| Ra | 5,2 | 1,6 | 1,1 | 31 | 69 |
| Rmax | - | 10,9 | 8,1 | - | 74 |
| Rz | 30,0 | 8,3 | 6,3 | 28 | 76 |
| Ra = moyenne arithmétique des valeurs absolues des écarts du profil; | | | | | |
| Rz = moyenne arithmétique des 5 valeurs d'écart maximum mesurées sur les 5 secteurs unitaires contigus de la zone de mesure; | | | | | |
| Rmax = éeatt maximum sur les 5 secteurs unitaires. | | | | | |

### Exemple 2

Un film de même composition que celui de l'exemple 1 a été obtenu au moyen d'une extrudeuse munie d'une filière plate. Ce film, à une température de 180°C, a été grainé par passage entre un cylindre en acier gravé (face I, gravure de type 1B, irrégulière, dureté: 570 HV) chauffé par circulation interne d'eau à 180°C, et un second cylindre gravé en acier (face II, gravure de type 2, irrégulière, dureté: 570 HV) chauffé par circulation interne d'eau à 165°C. La température de surface de ce cylindre, après grainage a été mesurée à environ 165 °C par une caméra à infrarouge.

Les mesures de rugosité, effectuées suivant la même procédure que celle employée pour l'exemple 1, sont données dans le tableau 2.

**Tableau 2:**

| valeurs des rugosités mesurées pour l'exemple 2 | | | | | |
|---|---|---|---|---|---|
| Face | Cylindre (µm) | Film avant stérilisation (µm) | Film après stérilisation (µm) | Rendement du grainage (%) | Stabilité à la stérilisation (%) |
| I | | | | | |
| Ra | 5,8 | 5,3 | 5,3 | 88 | 100 |
| Rmax | - | 31,6 | 31,6 | - | 100 |
| Rz | 31,0 | 26,2 | 25,6 | 85 | 98 |

| II | | | | | |
|---|---|---|---|---|---|
| Ra | 2,3 | 2,1 | 2,1 | 91 | 100 |
| Rmax | - | 14,0 | 14,3 | - | 102 |
| Rz | 12,8 | 11,6 | 11,8 | 91 | 102 |

### Exemple 3

L'exemple 2 a été reproduit, excepté que le second cylindre (face II) a été remplacé par un autre cylindre gravé en acier (gravure de type 3, irrégulière, dureté: 570 HV).

Les mesures de rugosité ont toujours été effectuées suivant la même procédure. Les résultats pour la face I correspondent à 2 % près aux résultats pour la face I de l'exemple 2. les résultats pour la face II sont mentionnés dans le tableau 3.

**Tableau 3:**

| valeurs des rugosités mesurées pour l'exemple 3 | | | | | |
|---|---|---|---|---|---|
| Face | Cylindre (µm) | Film avant stérilisation (µm) | Film après stérilisation (µm) | Rendement du grainage (%) | Stabilité à la stérilisation (%) |
| II | | | | | |
| Ra | 6,4 | 5,2 | 5,4 | 81 | 104 |
| Rmax | - | 34,9 | 36,1 | - | 103 |
| Rz | 34,9 | 26,7 | 28,5 | 77 | 107 |

### Exemple 4

L'exemple 2 a été reproduit, excepté que le premier cylindre (face I) a été remplacé par un autre cylindre gravé en acier (gravure de type 4, régulière en forme de losange, dureté: 570 HV).

Les mesures de rugosité ont toujours été effectuées suivant la même procédure. Les résultats pour la face II correspondent à 2 % près aux résultats pour la face II de l'exemple 2. les résultats pour la face I sont mentionnés dans le tableau 4.

**Tableau 4:**

| valeurs des rugosités mesurées pour l'exemple 4 | | | | | |
|---|---|---|---|---|---|
| Face | Cylindre (µm) | Film avant stérilisation (µm) | Film après stérilisation (µm) | Rendement du grainage (%) | Stabilité à la stérilisation (%) |
| I | | | | | |
| Ra | 19 | 20,5 | 21,3 | 108 | 104 |
| Rmax | 103 | 103 | 106 | 100 | 103 |
| Rz | 90 | 93 | 96 | 103 | 103 |

### Exemple 5

Un film de 350 µm d'épaisseur a été obtenu selon la même technique que pour les exemples 2 à 4, à partir d'une composition comprenant (les parts sont données en poids):
. un polymère de chlorure de vinyle de nombre K= 93 (résine obtenue par procédé en suspension) 100 parts
. plastifiant (diéthylhexylphtalate principalement) 60 parts
. stabilisant thermique 1 part

Ce film, à une température de 185°C a été grainé par passage entre un cylindre gravé en acier (face I, gravure de type 5, irrégulière, dureté: 570 HV), chauffé par circulation interne d'huile à 190°C, et un second cylindre gravé en acier (face II, gravure de type 2, irrégulière, dureté: 570 HV), chauffé par circulation interne d'huile à 170°C.

La rugosité du film résultant a été mesurée selon la procédure des exemples précédents. les résultats sont donnés au tableau 5.

**Tableau 5:**

| valeurs des nigosités mesurées pour l'exemple 5 | | | | | |
|---|---|---|---|---|---|
| Face | Cylindre (µm) | Film avant stérilisation (µm) | Film après stérilisation (µm) | Rendement du grainage (%) | Stabilité à la stérilisation (%) |
| I | | | | | |
| Ra | 2,1 | 1,9 | 2,0 | 90 | 105 |
| Rz | 12,2 | 10,9 | 11,6 | 89 | 106 |

| II | | | | | |
|---|---|---|---|---|---|
| Ra | 2,3 | 2,1 | 2,1 | 91 | 100 |
| Rz | 12,8 | 11,7 | 12,2 | 91 | 104 |

## Revendications

1. Procédé de fabrication d'un film thermoplastique grainé sur ses deux faces, par passage de matière thermoplastique entre deux cylindres de grainage, les deux cylindres de grainage étant essentiellement constitués de métal de haute dureté et le procédé réalisant le grainage simultané des deux faces du film.

2. Procédé selon la revendication 1 dans lequel le métal de haute dureté est de l'acier ou de la fonte.

3. Procédé selon l'une quelconque des revendications précédentes dans lequel chacun des cylindres est entraîné en rotation par un mécanisme indépendant.

4. Procédé selon l'une quelconque des revendications précédentes dans lequel l'un au moins des cylindres est maintenu à température désirée par circulation interne d'un fluide caloporteur.

5. Film thermoplastique grainé sur ses deux faces, obtenable par le procédé selon l'une quelconque des revendications précédentes, comprenant une polyoléfine de haute masse moléculaire moyenne ayant un MFI qui n'est pas supérieur à 3,0.

6. Film thermoplastique selon la revendication 5, **caractérisé en ce qu'**il comporte, sur ses deux faces, un grain de structure régulière.

7. Film thermoplastique selon la revendication 5, **caractérisé en ce qu'**il comporte, sur ses deux faces, au moins une zone optiquement claire.

8. Film thermoplastique selon la revendication 5, **caractérisé en ce qu'**il comporte, au moins sur une même face, un grain de structure régulière avec au moins une zone optiquement claire.

9. Utilisation d'au moins un film thermoplastique selon l'une quelconque des revendications 5 à 8 pour la fabrication d'un article à usage médical.

10. Article à usage médical comprenant au moins un film thermoplastique selon l'une quelconque des revendications 5 à 8.

11. Article à usage médical selon la revendication 11, sous forme de poche essentiellement constituée d'au moins un film thermoplastique selon l'une quelconque des revendications 5 à 8.

## Patentansprüche

1. Verfahren zur Herstellung einer beidseitig genarbten thermoplastischen Folie durch Durchführen des thermoplastischen Materials zwischen zwei Narbungszylindern, wobei die beiden Narbungszylinder im wesentlichen aus einem Metall mit hoher Härte bestehen und wobei das Verfahren die gleichzeitige Narbung der beiden Seiten der Folie bewirkt.

2. Verfahren nach Anspruch 1, worin das Metall mit hoher Härte aus Stahl oder aus Gußeisen besteht.

3. Verfahren nach einem der vorstehenden Ansprüche, worin jeder Zylinder durch einen unabhängigen Mechanismus in Rotation versetzt wird.

4. Verfahren nach einem der vorstehenden Ansprüche, worin wenigstens einer der Zylinder durch einen Innenumlauf eines Wärmeträgerfluids auf einer gewünschten Temperatur gehalten wird.

5. Thermoplastische, beidseitig genarbte Folie, erhältlich durch das Verfahren nach einem der vorstehenden Ansprüche, umfassend ein Polyolefin mit hoher mittlerer Molekularmasse mit einem nicht über 3,0 liegenden Schmelzindex.

6. Thermoplastische Folie nach Anspruch 5, **dadurch gekennzeichnet, daß** sie auf ihren beiden Seiten eine Narbung mit regelmäßiger Struktur trägt.

7. Thermoplastische Folie nach Anspruch 5, **dadurch gekennzeichnet, daß** sie auf ihren beiden Seiten wenigstens eine optisch klare Zone trägt.

8. Thermoplastische Folie nach Anspruch 5, **dadurch gekennzeichnet, daß** sie auf wenigstens einer gleichen Seite eine Narbung mit regelmäßiger Struktur mit wenigstens einer optisch klaren Zone trägt.

9. Verwendung wenigstens einer thermoplastischen Folie nach einem der Ansprüche 5 bis 8 zur Herstellung eines Gegenstandes für einen medizinischen Gebrauch.

10. Gegenstand zum medizinischen Gebrauch, umfassend wenigstens eine thermoplastische Folie nach einem der Ansprüche 5 bis 8.

11. Gegenstand zum medizinischen Gebrauch nach Anspruch 10 in Form eines Beutels, der aus wenigstens einer thermoplastischen Folie nach einem der Ansprüche 5 bis 8 gebildet ist.

## Claims

1. Process for the manufacture of a thermoplastic film which is grainy on its two faces, by passing thermoplastic material between two graining rolls, the two graining rolls consisting essentially of metal of high hardness and the process performing the simultaneous graining of the two faces of the film.

2. Process according to claim 1, in which the metal of high hardness is steel or cast iron.

3. Process according to either of the preceding claims, in which each of the rolls is driven in rotation by an independent mechanism.

4. Process according to any one of the preceding claims, in which at least one of the rolls is maintained at a desired temperature by internal circulation of a heat transfer fluid.

5. Thermoplastic film, grainy on its two faces, obtainable by the process according to any one of the preceding claims, **characterized in that** it comprises a polyolefin of high average molecular mass having a MFI not higher than 3.0.

6. Thermoplastic film according to claim 5, **characterized in that** it comprises a grain of uniform structure on its two faces.

7. Thermoplastic film according to claim 5, **characterized in that** it comprises at least one optically clear region on its two faces.

8. Thermoplastic film according to claim 5, **characterized in that** it comprises, at least on one and the same face, a grain of uniform structure with at least one optically clear region.

9. Use of at least one thermoplastic film according to any one of claims 5 to 8, for the manufacture of an article for medical use.

10. Article for medical use, including at least one thermoplastic film according to any one of claims 5 to 8.

11. Article for medical use according to claim 10, in the form of a pouch made up essentially of at least one thermoplastic film according to any one of claims 5 to 8.
